# EUROPÄISCHE PATENTSCHRIFT

(11) **EP 1 044 745 B1**
(45) Veröffentlichungstag und Bekanntmachung des Hinweises auf die Patenterteilung: **02.07.2003**
(21) Anmeldenummer: 99106243.1
(22) Anmeldetag: 13.04.1999
(51) Int. Cl.: B22D 17/26, B29C 33/26

(54) **Formschliesseinheit, insbesondere für eine Warmkammerdruckgiessmaschine**
Mould closing unit, especially for a hot-chamber die-cast machine
Unité de fermeture de moule, en particulier pour une machine à couler sous pression à chambre chaude

(43) Veröffentlichungstag der Anmeldung: 18.10.2000
(73) Patentinhaber: OSKAR FRECH GMBH & CO., 73614 Schorndorf (DE)
(72) Erfinder: Fink, Roland, 73650 Winterbach (DE); Erhard, Norbert Dr.-Ing., 73547 Lorch (DE); Noschilla, Herbert, 73614 Schorndorf (DE); Stillhard, Bruno, 9320 Flawil (CH)
(74) Vertreter: Patentanwälte Ruff, Wilhelm, Beier, Dauster & Partner

(56) Entgegenhaltungen:
- EP-A- 0 383 935
- DE-A- 3 018 288

## Beschreibung

Die Erfindung betrifft eine Formschließeinheit, insbesondere für eine Warmkammerdruckgießmaschine, mit einem Maschinenständer und einer daran angeordneten Führungsfläche für die vom Querhaupt aus betätigbare Schließeinheit, sowie mit einer Höhenverstellvorrichtung in der Form eines die Schließeinheit abstützenden unterhalb derselben angeordneten und an der Führungsfläche aufliegenden Scherenmechanismus, der von einem Antriebsaggregat auseinanderspreizbar ist.

Eine Formschließeinheit dieser Art ist aus der DE 30 18 288 C2 (Die Ansprüche sind in 2-teiliger Fassung gegenüber diesem Dokument abgegrenzt) bekannt. Solche Bauarten weisen den Vorteil auf, daß die Höhenverstellvorrichtung für die Formschließeinheit sehr einfach aufgebaut werden kann. Mehrere Anhebezylinder, die gleichzeitig und gleichlaufend angesteuert werden müssen, werden überflüssig.

Bei der bekannten Bauart ist als Antriebsaggregat zum Auseinanderspreizen des Scherenmechanismus ein hydraulischer Kolben vorgesehen, der in einem unmittelbar im Querhaupt angeordneten Druckzylinder geführt ist. Diese Ausgestaltung, die den Vorteil mit sich bringt, daß kein zusätzlicher Platz im Maschinenständer für die Anordnung eines Druckzylinders benötigt wird, macht es aber notwendig, das Querhaupt in besonderer Weise auszubilden und zu bearbeiten.

Der vorliegenden Erfindung liegt die Aufgabe zugrunde, eine Formschließeinheit der eingangs genannten Art einfach zu gestalten.

Zur Lösung dieser Aufgabe wird bei einer Formschließeinheit der eingangs genannten Art vorgesehen, daß als Antriebsaggregat ein unterhalb der Führungsflächen angeordneter und mit seiner Achse senkrecht zur Antriebsrichtung ausgerichteter elektrischer Servomotor vorgesehen ist, der über ein Winkelgetriebe einen am Scherenmechanismus angreifenden Spindelantrieb betätigt.

Durch diese Ausgestaltung wird die Anordnung eines Druckzylinders im Querhaupt überflüssig. Der Platzbedarf für die Anordnung des Servomotors unterhalb der Führungsfläche ist nur klein, weil die Längserstreckung des Servomotors im wesentlichen parallel zur Führungsfläche ausgerichtet ist. Es hat sich gezeigt, daß bei Verwendung entsprechender Übersetzungsverhältnisse auf diese Weise die relativ hohen Abstützkräfte für die Schließeinheit ohne weiteres von Elektromotoren aufzubringen sind, und daß man eine wesentlich feinere Abstimmung der Anhebegeschwindigkeiten auf diese Weise erreichen kann, ohne daß der Bauaufwand zu groß wird.

In Weiterbildung der Erfindung kann der Servomotor als ein Getriebebremsmotor ausgebildet sein, so daß auch bei Stromausfall nicht die Gefahr besteht, daß die Schließeinheit aus ihrer einmal eingestellten Lage zurückfällt.

Vorteilhaft ist es, wenn die Achse des Servomotors parallel zu den Führungsstangen der Schließeinheit ausgerichtet ist, weil dann der Platzbedarf für die Anordnung des Motors minimiert werden kann. In Weiterbildung der Erfindung kann jeweils ein Ende der Hebel des Scherenmechanismus schwenkbar am Gehäuse des fest im Maschinenständer gelagerten Gehäuses des Winkelgetriebes gelagert sein, während jeweils ein Ende der nicht am Winkelgetriebe gelagerten Hebel des Scherenmechanismus schwenkbar in einem Druckstück in der Schließeinheit belagert werden kann.

Die Erfindung ist anhand eines Ausführungsbeispieles in der Zeichnung dargestellt und wird im folgenden erläutert. Es zeigen:
- Fig. 1: eine schematische, teilweise aufgebrochene Seitenansicht einer Warmkammerdruckgießmaschine mit einer höhenverstellbaren Formschließeinheit nach der Erfindung,
- Fig. 2: eine vergrößerte Darstellung des Schnittes durch die Formschließeinheit der Fig. 1 längs der Schnittlinie II-II, und
- Fig. 3: die schematische Darstellung eines Schnittes durch die Einrichtung der Fig. 2 längs der Schnittlinie III-III.

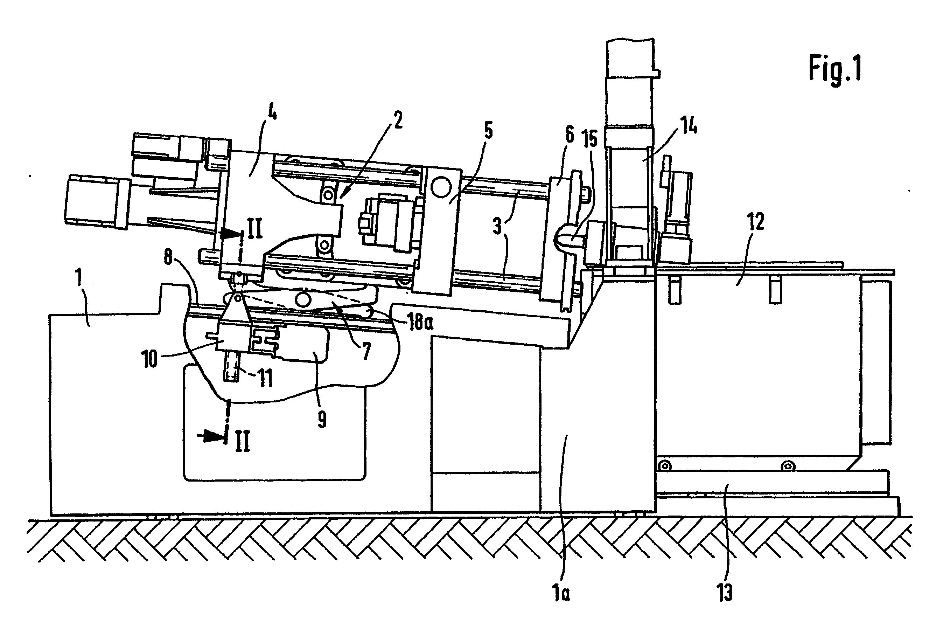

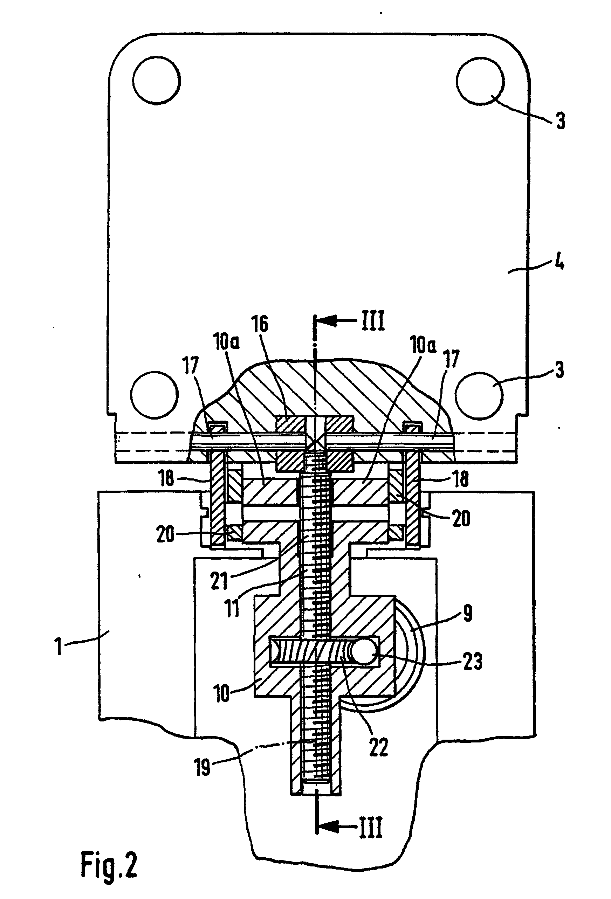

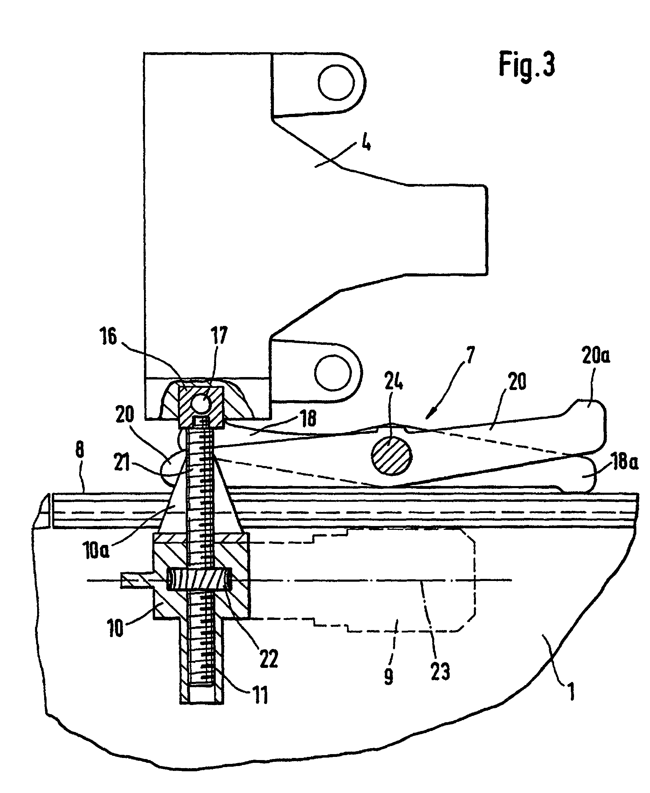

Die Fig. 1 zeigt zunächst, daß auf einem Maschinenständer 1 eine Formschließeinheit 2 gelagert ist, die aus leicht zur Horizontalen geneigt angeordneten Führungsstangen 3 aufgebaut ist, an denen eine von der Schließeinheit 2 bewegbare Formenaufspannplatte 5 und eine feste Formenaufspannplatte 6 angeordnet sind. Die Schließeinheit 2 wird dabei von einem Querhaupt 4 aus betätigt, das zusammen mit der Schließeinheit 2 und den Führungsstangen 3 über einen Scherenmechanismus 7 auf einer Führungsfläche 8 des Maschinenständers 1 abgestützt wird, der sich in noch näher anhand der Fig. 2 und 3 zu erläuternder Weise über einen elektrischen Servomotor 9 und ein Winkelgetriebe 10 mit einer darin geführten Gewindespindel 11 auseinanderspreizen läßt. Die Abtriebsachse des Servomotors 9 verläuft dabei im wesentlichen parallel zu den Führungsstangen 3 und zu der Führungsfläche 8. Die Achse der Spindel 11 verläuft in etwa senkrecht zu der Abtriebsachse des Servomotors 9.

An den Maschinenständer 1 schließt in an sich bekannter Weise ein weiterer Teil 1a des Maschinenrahmens an, in dem eine Traverse 14 zur Halterung und Betätigung des Gießkolbens angeordnet ist, der in nicht näher gezeigter, weil bekannter Weise in den innerhalb der Schmelze liegenden Gießzylinder eingreift. In dem Maschinenrahmen 1a ist außerdem auf einer Führung 13 ein Schmelzofen 12 vorgesehen. Das Füllen der Form erfolgt über ein Mündstück 15, an das die feste Formenaufspannplatte für den Gußvorgang dichtend herangefahren wird.

Wie die Fig. 2 und 3 zeigen, ist im Querhaupt 4 ein Druckstück 16 angeordnet, welches das obere freie Ende einer Gewindespindel 11 aufnimmt. Dieses Druckstück 16 dient auch zur Aufnahme der inneren Enden von Bolzen 17, deren Achsen senkrecht zu der Achse 19 der Spindel 11 verlaufen. An den Bolzen 17 sind jeweils die der Spindel 11 zugewandten freien Enden der beiden äußeren Hebel 18 des Scherenmechanismus 7 gelagert, deren andere Enden 18a auf der Führungsfläche 8 aufliegen, wie Fig. 1 und 3 zeigen.

Die der Spindel 11 zugewandten Enden der inneren Hebel 20 des Scherenmechanismus 7 sind an Bolzen 21 gelagert, die fest jeweils in einem sich hülsenartig nach außen erweiternden Gehäuseteil 10a des Winkelgetriebes 10 gehalten sind. Das Winkelgetriebe selbst und damit die Gehäuseteile 10a liegen auf dem Maschinenrahmen 1 auf.

Die Spindel 11 steht in Eingriff mit einem innerhalb des Gehäuses des Winkelgetriebes 10 drehbar gelagerten Schneckenrad 22, das seinerseits durch eine entsprechende, mit seinem Umfang zusammenwirkende Spindel 23 in Drehung versetzt werden kann, die die Abtriebsachse des elektrischen Servomotors 9 ist. Wird daher der Servomotor 9 entsprechend beaufschlagt, dann wird das Schneckenrad 22 über die Spindel 23 in Drehung versetzt, und die Spindel 11 bewegt sich aus der in den Fig. 1, 2 und 3 gezeigten Ausgangslage nach oben. Sie drückt dabei das Druckstück 16 mit den Bolzen 17 nach oben, während die entsprechenden Enden der inneren Hebel 20 an den ortsfest verbleibenden Bolzen 21 gehalten werden. Der Scherenmechanismus 7 wird daher um seine mittlere Achse 24 aufgespreizt, so daß sich nicht nur die Hebelenden im Bereich der Spindel 11, sondern auch die Enden 18a und 20a der Hebel voneinander entfernen. Die Enden 20a stützen (Fig. 1) eine weitere Fläche des Schließteiles 2 ab, so daß die gesamte Schließeinheit 2 angehoben werden kann, um die vom Mundstück 15 bestimmte Angußstelle der nicht gezeigten Form mehr nach oben zu verlegen, wenn dies erforderlich ist.

Wie der Fig. 1 ohne weiteres entnommen werden kann, ist der zusätzliche Platzbedarf für die Anordnung des Elektroantriebes äußerst gering, weil die Achse des Servomotors 9 und damit auch die Antriebsspindel 23 etwa parallel zu den Achsen der Führungsstangen 3 und zu der Führungsfläche 8 ausgerichtet ist. Es wird daher nur in der Mitte zwischen den Hebelpaaren 18 und 20 unterhalb der Führungsfläche ein gewisser Raum für die Anordnung des Servomotors 9 und des Winkelgetriebes 10 benötigt.

Der Servomotor 9 wird zweckmäßig als ein Getriebebremsmotor ausgebildet. Durch diese Maßnahme kann verhindert werden, daß bei Stromausfall der Scherenmechanismus die einmal eingestellte Lage nicht beibehält. Die Spindeln 11 und 23 und das dazugehörige Schneckenrad 22 können in bekannter Weise ebenfalls mit selbsthemmenden Steigungen ausgestaltet werden. Durch den Elektroantrieb wird eine sehr feinfühlige Höhenverstellung möglich, die es ohne großen zusätzlichen Aufwand auch ermöglicht, nach einer relativ schnellen Höhenverstellung durch entsprechende Drehzahlreduktion eine sehr genaue und langsam erfolgende Anpassung an die Angußposition zu erreichen.

Auf die geschilderte Art und Weise kann die Formschließeinheit einer Warmkammerdruckgießmaschine in einfacher Weise in ihrer Höhe feinfühlig eingestellt werden.

## Patentansprüche

1. Formschließeinheit, insbesondere für eine Warmkammerdruckgießmaschine, mit einem Maschinenständer (1) und einer daran angeordneten Führungsfläche (8) für die vom Querhaupt (4) aus betätigbare Schließeinheit (2) sowie mit einer Höhenverstellvorrichtung in der Form eines die Schließeinheit abstützenden, unterhalb derselben angeordneten und an der Führungsfläche aufliegenden Scherenmechanismus (7), der von einem Antriebsaggregat auseinanderspreizbar ist,
**dadurch gekennzeichnet,**
**daß** als Antriebsaggregat (9, 11) ein unterhalb der Führungsflächen (8) angeordneter und mit seiner Achse (23) senkrecht zur Antriebsrichtung ausgerichteter elektrischer Servomotor (9) vorgesehen ist, der über ein Winkelgetriebe (10) einem am Scherenmechanismus (7) angreifenden Spindelantrieb (11) betätigt.

2. Formschließeinheit nach Anspruch 1, **dadurch gekennzeichnet, daß** der Servomotor (9) als ein Getriebebremsmotor ausgebildet ist.

3. Formschließeinheit nach Anspruch 1, **dadurch gekennzeichnet, daß** die Achse (23) des Servomotors (9) parallel zu den Führungsstangen (3) der Schließeinheit (2) ausgerichtet sind.

4. Formschließeinheit nach Anspruch 1, **dadurch gekennzeichnet, daß** jeweils ein Ende der Hebel (20) des Scherenmechanismus (7) schwenkbar am Gehäuse (10a) des frei auf dem Maschinenständer (1) aufliegenden Gehäuses (10) des Winkelgetriebes gelagert ist.

5. Formschließeinheit nach Anspruch 4, **dadurch gekennzeichnet, daß** jeweils ein Ende des nicht am Winkelgetriebe (10) gelagerten Hebel (18) der Scherenmechanismus (7) schwenkbar an einem Druckstück (16) in der Schließeinheit (2) gelagert ist.

## Claims

1. A die-closing unit, especially for a hot-chamber pressure-diecasting machine, comprising a machine platform (1) and a guide surface (8) arranged thereon for the closing unit (2) which is operable from the crosshead (4), and comprising a vertical adjustment device in the form of a scissors mechanism (7) that supports the closing unit, is arranged beneath the same and rests on the guide surface and which can be spread apart by a drive assembly, **characterised in that** there is provided as the drive assembly (9, 11) an electric servomotor (9) that is arranged beneath the guide surfaces (8) and is oriented with its axis (23) perpendicular to the drive direction and which, *via* an angular gear (10), operates a spindle drive (11) that acts on the scissors mechanism (7).

2. A die-closing unit according to claim 1, **characterised in that** the servomotor (9) is constructed as a geared braking motor.

3. A die-closing unit according to claim 1, **characterised in that** the axis (23) of the servomotor (9) is oriented parallel to the guide rods (3) of the closing unit (2).

4. A die-closing unit according to claim 1, **characterised in that** one end of each lever (20) of the scissors mechanism (7) is pivotally mounted on the housing (10a) of the angular gear housing (10) which rests freely on the machine platform (1).

5. A die-closing unit according to claim 4, **characterised in that** one end of each lever (18) of the scissors mechanism (7) not mounted on the angular gear (10) is pivotally mounted on a thrust element (16) in the closing unit (2).

## Revendications

1. Unité de fermeture de moule, en particulier pour une machine à couler sous pression à chambre chaude, comprenant un montant de machine (1) et une surface de guidage (8) agencée sur celui-ci pour l'unité de fermeture (2) pouvant être actionnée depuis le fronton (4), et comprenant également un dispositif de réglage de la hauteur sous la forme d'un mécanisme à cisailles (7) soutenant l'unité de fermeture, agencé en dessous de celle-ci et reposant sur la surface de guidage, lequel peut être écarté par un équipement moteur,
**caractérisée en ce qu'**il est prévu comme équipement moteur (9, 11) un servomoteur électrique (9) agencé en dessous des surfaces de guidage (8) et orienté avec son axe (23) perpendiculaire à la direction d'entraînement, qui actionne au moyen d'un engrenage angulaire (10) une commande de broches (11) qui s'engage dans le mécanisme à cisailles (7).

2. Unité de fermeture de moule selon la revendication 1, **caractérisée en ce que** le servomoteur (9) est réalisé comme un motofreineur à engrenages.

3. Unité de fermeture de moule selon la revendication 1, **caractérisée en ce que** l'axe (23) du servomoteur (9) est orienté parallèlement aux tiges de guidage (3) de l'unité de fermeture (2).

4. Unité de fermeture de moule selon la revendication 1, **caractérisée en ce qu'**une extrémité des leviers (20) du mécanisme à cisailles (7) est à chaque fois installée de manière pivotante sur le logement (10a) du boîtier (10) de l'engrenage angulaire reposant librement sur le montant de machine (1).

5. Unité de fermeture de moule selon la revendication 4, **caractérisée en ce qu'**une extrémité du levier (18) qui n'est pas monté sur l'engrenage angulaire (10) du mécanisme à cisailles (7) est à chaque fois installée de manière pivotante sur un membre de pression (16) dans l'unité de fermeture (2).
